# EUROPEAN PATENT SPECIFICATION

(11) **EP 0 750 537 B1**
(45) Date of publication and mention of the grant of the patent: **17.10.2001**
(21) Application number: 95907213.3
(22) Date of filing: 29.12.1994
(51) Int. Cl.: B23P 21/00, B21F 3/06, B21F 3/02

(54) **APPARATUS FOR MANUFACTURING MATTRESSES AND BOX SPRINGS**
VORRICHTUNG ZUM HERSTELLEN VON MATRATZEN UND UNTERMATRATZENGEFÜGEN
DISPOSITIF DE FABRICATION DE MATELAS ET DE SOMMIERS METALLIQUES

(30) Priority: 14.03.1994 US 212235
(43) Date of publication of application: 02.01.1997
(73) Proprietor: SIMMONS COMPANY, Atlanta, Georgia 30328-5369 (US)
(72) Inventor: ST. CLAIR, Albert, Ronald, Lilburn, Georgia 30247 (US)
(74) Representative: Hooiveld, Arjen Jan Winfried
(86) International application number: PCT/US94/14430
(87) International publication number: WO 95/24987

(56) References cited:
- WO-A-94/01811
- CA-A- 958 967
- GB-A- 471 228
- JP-A- 3 165 942
- JP-A- 3 285 729
- US-A- 3 093 727
- US-A- 3 293 477
- US-A- 3 740 984
- US-A- 3 908 922
- US-A- 4 030 327
- US-A- 4 173 135
- US-A- 4 235 362
- US-A- 4 393 678
- US-A- 4 528 831
- US-A- 4 680 950
- US-A- 4 779 438
- US-A- 4 929 809
- US-A- 4 934 165
- US-A- 4 938 046
- US-A- 5 182 930

## Description

### Technical Field

This invention relates in general to the manufacture of mattresses and box springs, and particularly relates to the manufacture of springs for use in pocketed coil, or "Marshall" type constructions.

### Background of the Invention

In the prior art, it is known to form springs from wire, and to insert said springs into springs of pocketed or "Marshall" type coils. An example of such a construction is illustrated in US Patent Nos. 4,234,983 and 4,986,518 to Stumpf. Methods and apparatuses for providing such constructions is disclosed in US Patent Nos. 4,439,977 and 4,854,023 to Stumpf. Such elongate constructions, sometimes called pocketed coil strings, may then be assembled into an innerspring construction as disclosed in US Patent Nos. 4,566,926 and 4,578,834 to Stumpf. US Patent No. 4,528,831, describes a wire coiling machine according the preamble of claim 1.

Although the above inventions provide effective, a need has been recognized for a method and apparatus for providing such innerspring constructions in a variety of sizes and coil heights to satisfy a buying public which has a recognized variety of mattress preferences. In order to minimize inventory expenses and to provide a truly "produced as needed" product, a need was recognized to provide a single manufacturing process which could be adapted to produce a variety of innerspring construction sizes. To achieve this goal, a need has also been recognized for a spring manufacturing apparatus which can manufacture springs having differing wire lenghts, spring heights, and spring widths, with a minimum of changeover difficulties.

### Summary of the Invention

The present invention overcomes inadequacies in the prior art by providing an apparatus for manufacturing springs for an innerspring construction, which provides an optimization of spring size to production rate. This is accomplished in part by providing interchangable and matches change gears and spreader cams which correspond to a particular spring size.

Therefore, it is an object of the present invention to provide an improved mattress construction.

It is a further object of the present invention an improved method for manufacturing mattresses.

It is a further object of the present invention to provide an improved apparatus for manufacturing mattresses which is cost-efficient to operate.

It is a further object of the present invention to provide an improved apparatus for manufacturing mattresses which is cost-efficient to maintain.

It is a further object of the present invention to provide an improved apparatus for manufacturing mattresses which is simple in operation.

It is a further object of the present invention to provide an improved apparatus for manufacturing mattresses which is readily compatible with other manufacturing devices.

It is a further object of the present invention to provide an improved apparatus for manufacturing mattresses which is reliable in operation.

It is a further object of the present invention to provide an improved apparatus for manufacturing mattresses which may be operated with a minimum of operator oversight.

Other objects, features, and advantages of the present invention will become apparent upon reading the following detailed description of the preferred embodiment of the invention when taken in conjunction with the drawing and the appended claims.

### Brief Description of the Drawings

Figure 1 is a pictorial view of a wire forming apparatus according to the present invention, facing the front left corner of the apparatus.

Figure 2 is an illustrative view of a prior art power transfer scheme.

Figure 3 is an illustrative view of a power transfer scheme according to the present invention.

Figure 4 is an isolated view of one portion of the apparatus of Figure 1.

Figure 5 is an isoltated view of an upper wire feed roll assembly.

Figure 6 is an isolated view of a lower wire feed roll assembly.

Figure 7 is an isolated view of a wire straightening assembly.

Figure 8 is an isolated view of a cross sectional section of an upper or lower feed roll.

Figure 9 is an isolated view of a cross sectional section of an upper and lower feed roll wire therebetween.

Figure 10 is a pictorial view of a coil formed by the apparatus of Figure 1.

Figure 11 is a side plan view of a coil formed by the apparatus of Figure 1.

Figure 12 is an illustrative view of the linkage between the bull gear and the sliding front bearing of the upper feed roll shaft.

Figure 13 is an illustrative view of the wire passing through the feed rolls and being bent into a spring.

Figure 14 is an isolated view of the linkage between the bull gear and the coil diameter roller.

Figure 15 is an isolated view of the linkage between the bull gear and the spreader bar.

Figure 16 is an isolated view of the linkage between the bull gear and the wire cutoff knife.

Figure 17 is a chart illustrating various change gear ratios possible under the present invention.

Figure 18A and 18B are a pair of charts illustrating differing processes varying due to use of different change gear ratios.

Figure 19 is a view of pocketed coils.

Figure 20 is a view of an innerspring construction.

Figure 21 is a view of a pocketed coil assembly machine.

### Detailed Description of the Preferred Embodiment

Reference is now made to the figures, where like numerals designate like objects throughout the several views.

### General Construction and Operation

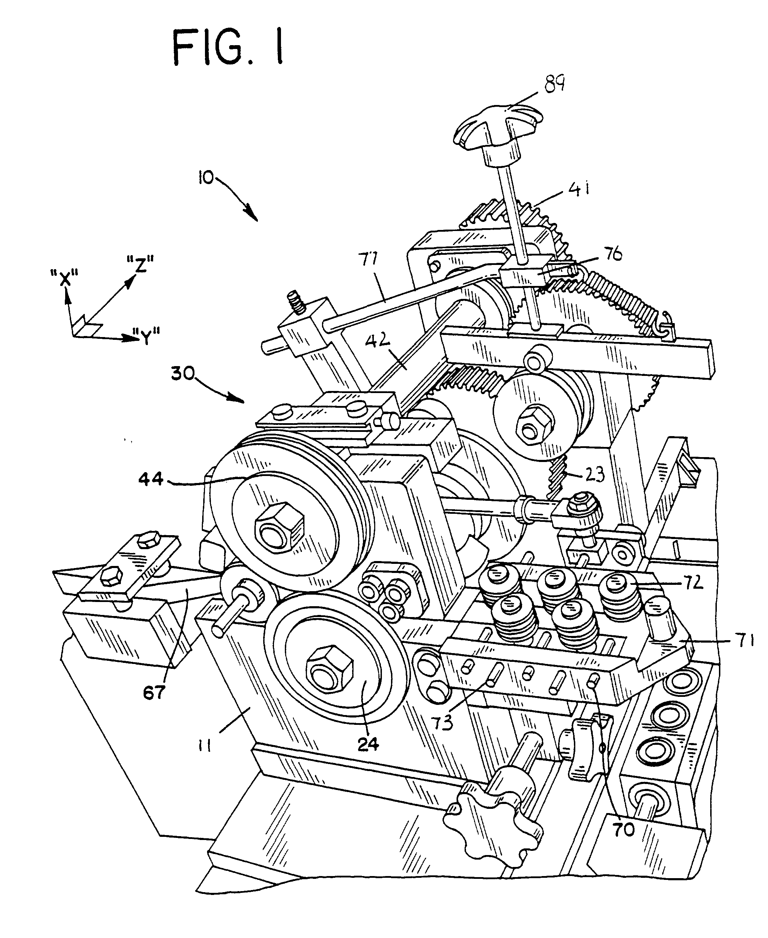

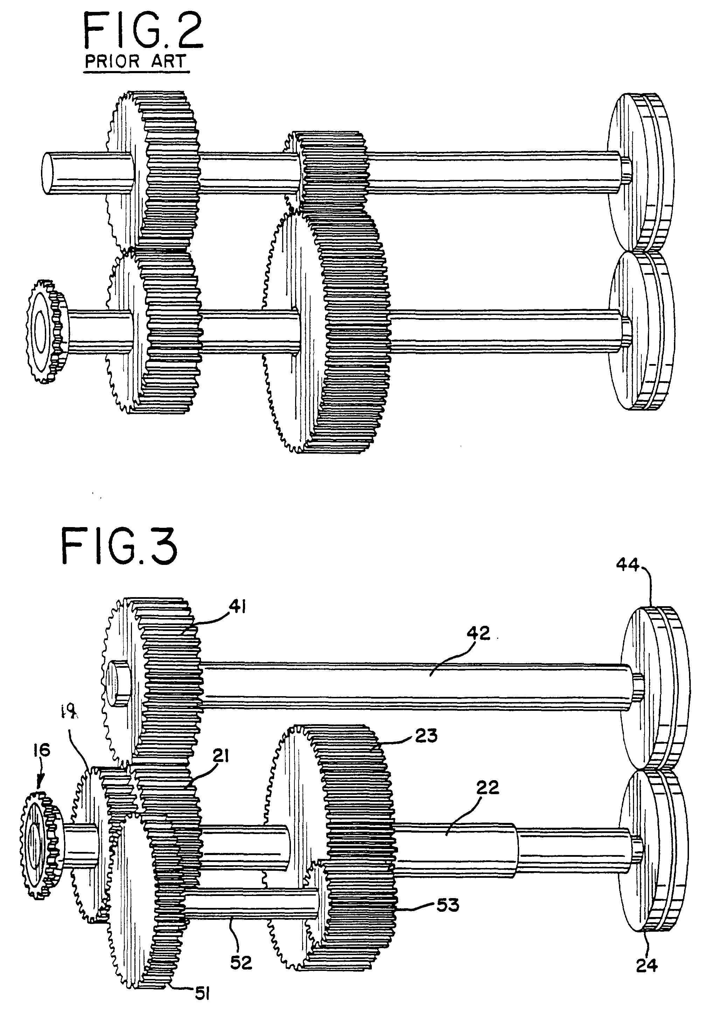

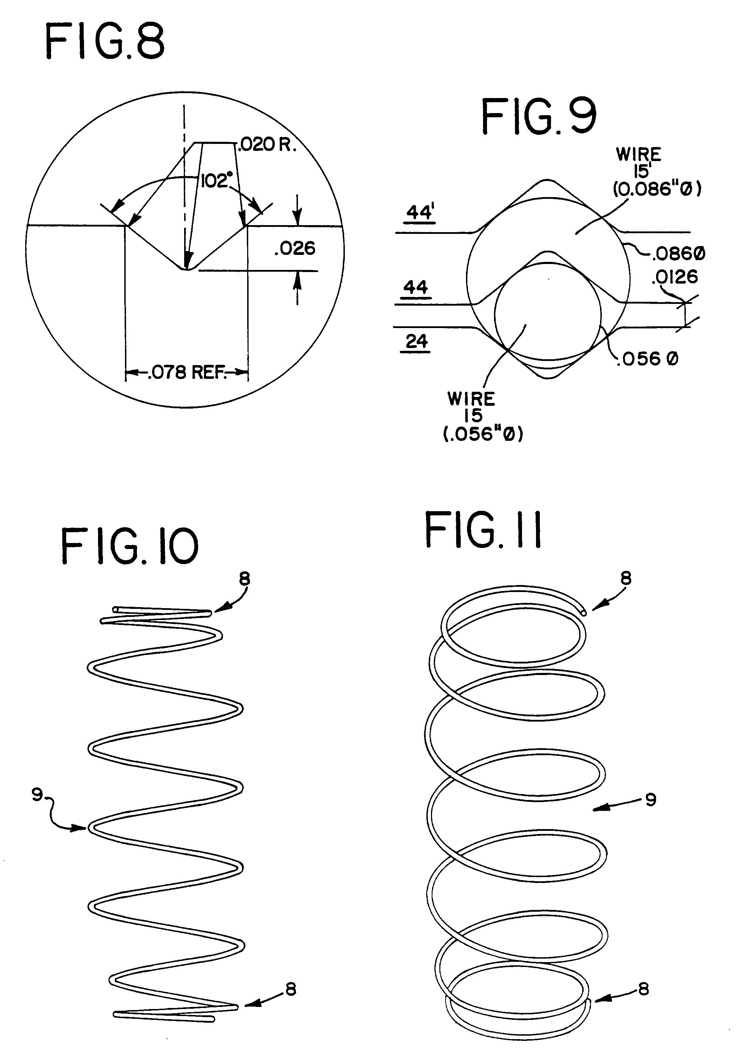

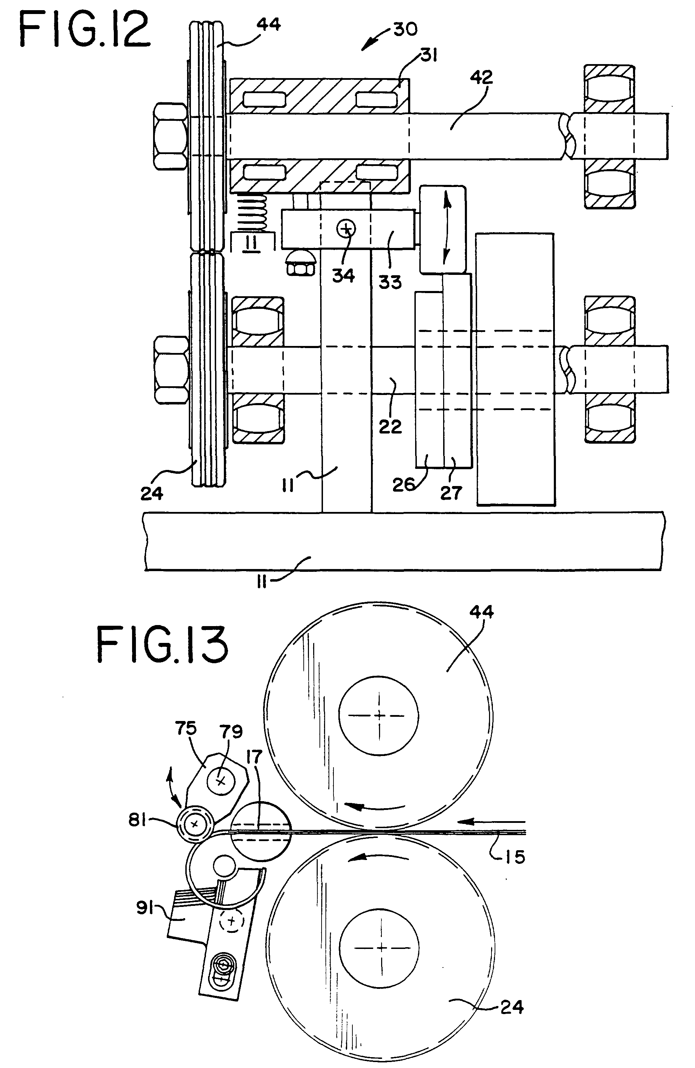

General operation of the method and apparatus according to the present invention is now made. Referring now to Figure 1, wire is pulled from a wire spool (not shown) and straightened by passing through a wire straightening station 70. The wire is fed by means of two cooperating upper and lower feed rolls 44, 24, respectively, wich periodically combine to grip and feed the wire a selected distance. The wire is bent and cut to result in a finished wire spring such as that shown in Figure 10 and 11. Referring now to Figure 3, change gears 19, 51, attached to a lower feed roll shaft 22, and a jackshaft 52, respectively, allow for adjustment or wire feed per each wire-forming cycle. This is to be distinguished from prior art system shown in Figure 2.

### Particular Construction Operation

For purposes of this discussion, the spring forming apparatus 10 will be considered to have a "front", "rear", "left" and "right" sides, and is in relation to three mutually perpendicular axes, comprising axis "X", "Y", and "Z" (See Figure 1). In operation the wire forming apparatus will it will be understood that, if an observer views the front of the apparatus, the operator will view the initial wire feed into the machine as going right-to-left and along the "Y" axis, with the springs formed thereon exiting along a path coming toward the observer and along the "Z" axis.

### General Power Transmission

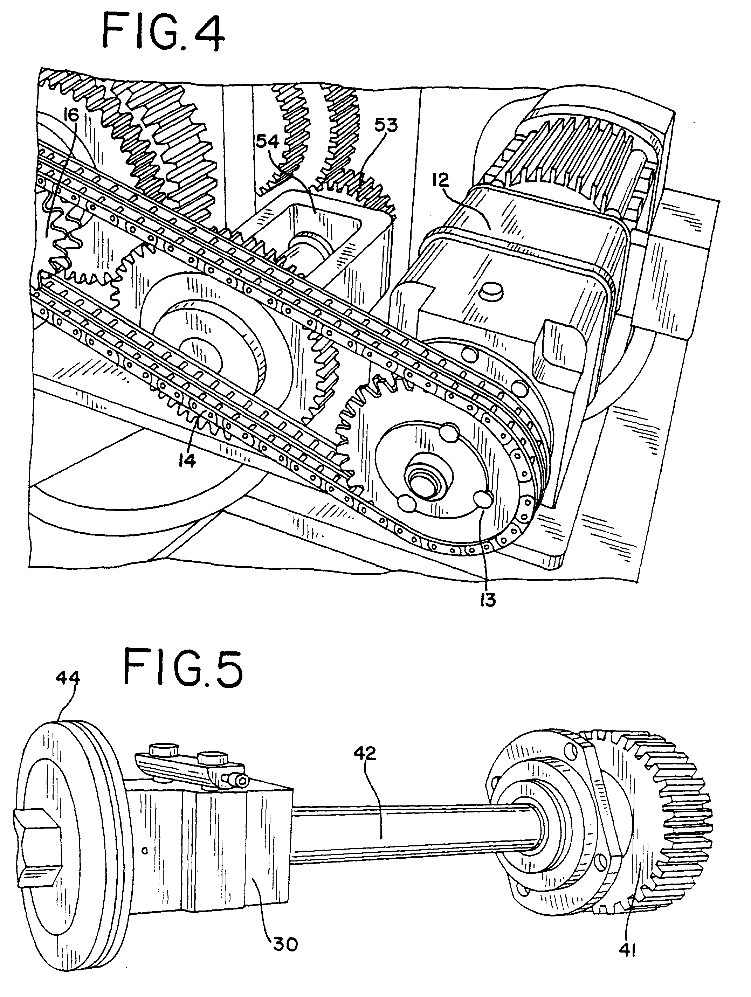

As illustrated particularly in Figures 3 and 4, power is supplied by an electric motor and gearbox assembly 12 or other power source. A chain 14 transfers power from a sprocket 13 mounted to the electric motor to a lower feed roll shaft sprocket 16 mounted approximate the end of a lower feed roll shaft 22, which is part of a lower feed roll shaft assembly 20. The lower feed roll shaft 22 is rotatably mounted relative to a frame 11 by bearings as known in the art, such that the lower feed roll shaft has a preferably stationary rotational axis relative to the frame 11 and substantially along the "Z" axis.

A change gear 19 is fixed approximate the rear end of the lower feed roll shaft 22. This gear 19 drives a change gear 51 fixed to the jackshaft 52. The jackshaft 52 is rotatably mounted to a jackshaft housing 54 by typical bearings and substantially along the "Z" axis. The jackshaft housing 54 is fixed to the frame 11.

A pinion gear 53 is fixed approximate the front end of the jackshaft 52. This pinion gear 53 drives a bull gear 23, which is rotatably mounted by a bearing to the lower feed roll shaft 22. It is very important to the note that the bull gear 23 is not fixed to the lower feed roll shaft 22, but is allowed to rotate relative to the lower feed roll shaft 22.

As discussed in further detail below, the bull gear 23 acts as type of timing device, in that the timing of wire feeding, spring formation, spring cutoff and the timing of other actions.

### Upper Feed Roll Shaft Assembly

Referring now to Figures 3, 5, and 6, an upper feed roll shaft 42 is rotatably mounted relative to frame 11 by a pair of bearings which allow the shaft to pivot somewhat as discussed in detail later in this application. Power is transferred from the lower feed roll shaft 22 to the upper feed roll shaft 42 by means of interacting sprockets 21, 41, fixed approximate the rear end of the lower and upper feed roll shafts, 22, 42, respectively.

Approximate the front end of the upper feed roll shaft 42 is fixed an upper feed roll 44. As discussed in detail later in this application, the upper feed roll shaft 42 is periodically pivoted upwardly, causing the upper feed roll 44 to move upward and away from the lower feed roll 24, such that even though the two rolls are rotating, a gap therebetween prevents the two rolls from gripping the wire. However, when the upper feed roll shaft is in its "down" position, the feed rolls cooperate to grip/or the wire therebetween, to facilitate feeding of the wire for later forming and cutting.

### Lower Feed Roll Shaft Assembly

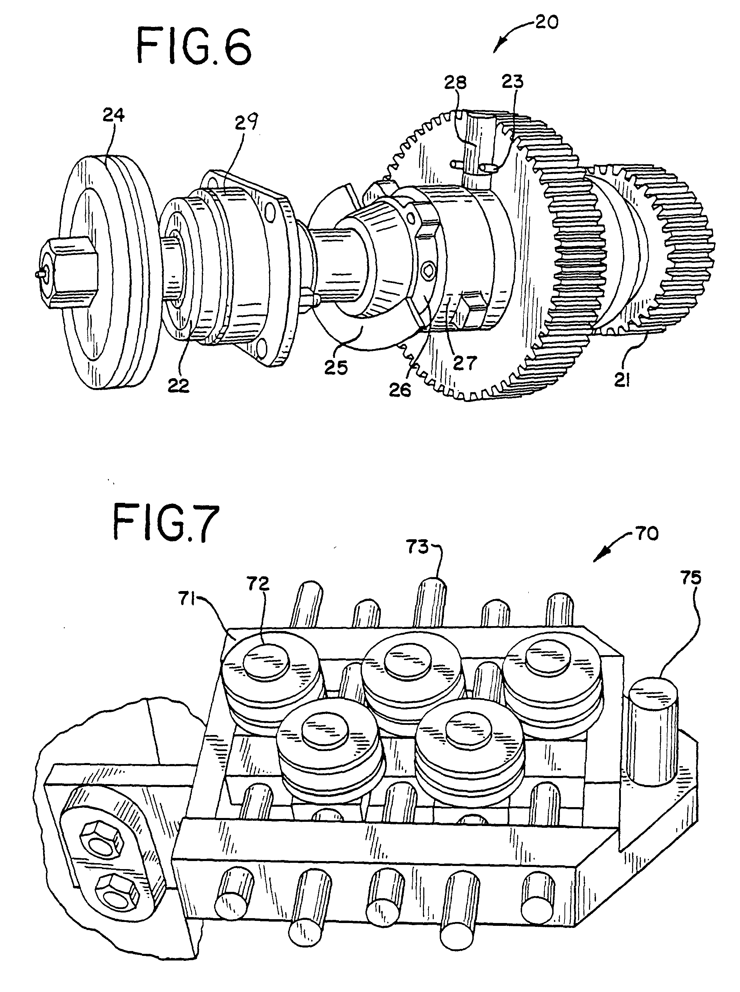

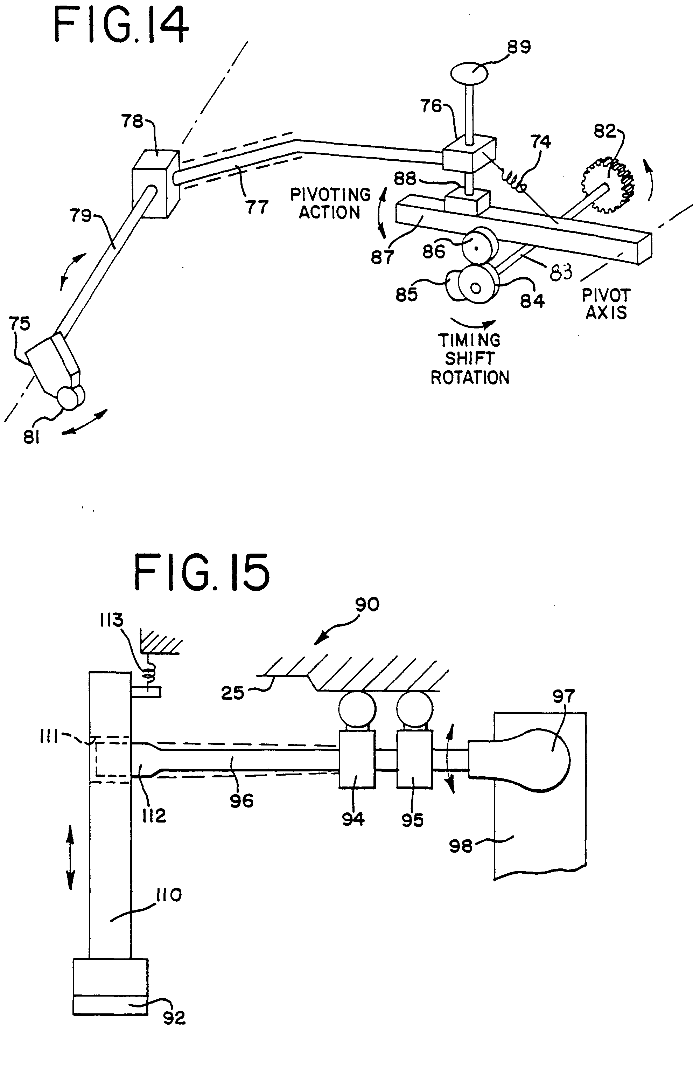

Referring particularly to Figure 6, the lower feed roll shaft assembly 20 includes a lower feed roll shaft 22, a wire feed roll 24 fixed to the lower feed roll shaft 22, a pair of bearings 29, a bull gear 23 having a bearing therein, a spreader cam 25 fixed relative to the bull gear 23, a movable wire feed cam 27 adjustably fixed relative to the bull gear 23, a cutting knife driver 28 attached to the leading face of the bull gear 23, and a timing gear (not shown), attached adjacent the rear side of the bull gear. The timing gear drives a timing shaft 83 (See Figure 14) which controls the timing of various pneumatically driven processes downstream of spring forming, including coil compression, coil insertion into fabric pocketing, pocket fabric feeding and pocket fabric sealing. Thus it may be seen that the timing of these pneumatic operations is dependent upon the speed of the bull gear.

The lower feed roll shaft 22 is rotatably mounted relative to the stationary frame 11.

### Wire Feeding

The wire to be used in forming the spring is a typical spring wire. One type of wire is an upholstery wire having a property of 1,86-2,00 GPa (270,000-290,000 pounds per square inch) tensile strength.

### The Straightener

Referring now to Figure 7, a wire straightening assembly 70 is illustrated, which includes a wire straightening frame 71, and five straightener rollers 72. Each straightener roller 72 is mounted to a corresponding roller block 75 which may slide relative to the wire straight frame 71. Adjusment and fixation of the corresponding roller blocks 75 to the wire straightening frame 71 is done by corresponding roller studs 73. As may be understood, the relative positioning of the straightener rollers 72 allows an operator to cause wire coming from a spool-type roll to be straightened prior to coiling an cutting.

### The V-Grooved Rolls

As discussed above, the two wire feed rolls 24, 44 pinch the wire to feed it. As shown in Figure 12, two V-shaped grooves are in each of the rolls 24, 44. Referring now to Fig. 8, the cross-sectional area of one of the grooves in each of the wire feed rolls is shown. As may be seen in light of Fig. 9, the V-shaped cross section of the trough allows different gauges of wire to be used. The two gauges shown in Fig. 9 are 2,18mm (0.086") and 1,42mm (0.056") in diameter. Two grooves are in each roller to allow either roll to be reversed if one groove wears out. Only one groove per roll is utilized during operation.

### The Sliding Upper Front Bearing Assembly

Referring now to Figs 1 and 12, the upper front bearing assembly 30 functions to allow the front end of the upper front feed roll shaft 42 to be lifted, to allow the upper feed roll 44 to be lifted relative to the lower feed roll 24, to facilitate selective feeding of wire gripped therebetween.

The upper front bearing assembly 30 includes a slidable bearing block 31 into which is mounted a roller bearing. The bearing block 31 is slidably mounted relative to the frame 11 along an axis which is substantially vertical. The bearing block is spring loaded such that the block is biased into an "up" postition, the position in which the wire is not gripped by the two feed rollers.

The bearing block 31 is periodically indexed into a "down" position, which facilitates periodic feeding of the wire via the two rollers. This indexing is initiated by a pair of wire feed cams 26, 27, which are fixed relative to the bull gear (not shown in Figure 12) and are allowed to rotate with the bull gear 23 relative to the lower wire feed shaft 22. The pair of wire feed cams includes a fixed wire feed cam 26 and a moveable wire feed cam 27. Both of these cams provide a rolling path for a single roller member 32, which is springbiased against the cams and facilitates up-and-down movement of the roller member as discussed in later detail.

The roller member 32 is rotatably mounted along a substantially horizontal axis to the rear end of an elongate pivot arm 33. This pivot arm 33 is pivotably mounted relative to frame 11 along a substantially horizinatal axis at pivot point 34. The front end of the elongate pivot arm 33 is attached to the upper front bearing block 31, such that downward movement of the roller member 32 translates into an upward movement of the bearing block 31 (as well as the upper feed roll).

The fixed and movable cams 26, 27, are substantially similar in shape. The function of the leading (fixed) cam 26 is to cause the cam follower 32 to move from an upper position (no wire feed) to a lower position (wire feed), which is done by allowing the cam follower to be ramped up to the high side of came 26. The cam follower then is passed to the high side of cam 27, where it eventually is allowed to ramp down depending on the position of movable cam 27.

As may be seen, spherical bearings are used at the rear of the upper and lower feed roll shafts, and at the front of the lower feed roll shaft.

### Wire Forming

### General

Referring now to Figure 13, the wire 15 is fed from the wire feed rolls 44, 24, through a fixed forming tube 17, which serves as a consistent positioning guide for the wire. The wire is then bent downwardly and into a curve by bending roller 81, also known as diameter roller 81. As discussed later in further detail, this action defines the "diameter" of the coil spring, which varies along its length.

After being bent by the diameter roller 81, the wire then passes along side spreader cam 91, which as discussed in later detail is movable along substantially horizontal axis along the "Z" direction. The more the spreader cam 91 is moved forwardly, the more the convolutions of the coil spring are spread. It may be understood that for a coil spring as shown in Figures 10 and 11, the spring convolutions are spread more in the center of the spring than at its ends.

### The Coil Diameter Assembly 80

It may be understood that for the coils shown in Figs. 10 and 11, the diameter of the coil at its center is greater than the diameter at its ends. For this purpose, varying amounts of the bending in this direction is provided. The coil diameter assembly 80 provides a bending action to the wire which determines the width (at the ends and at the middle) of the springs being manufactured.

Referring now also to Figure 14, the construction and operation of the coil diameter assembly 80 is now discussed. Power and timing is obtained from a timing gear (not shown, attached to the rear of the bull gear) which drives the takeoff gear 82, which is fixed to the rear end of a timing shaft 83, which itself is rotatably mounted along the "Z" direction relative to frame 11 by bearings as known in the art.

A pair of cams 84, 85, are adjustably mounted relative to the timing shaft. These cams engage a cam follower 86, which is rotatably mounted relative to pivoting bar 87 which is pivotably mounted relative to frame 11 along a substantially vertical "front-to-back" pivot axis parallel to the "Z" direction. As the cam follower 86 is moved up and down by the leading cam, the pivot bar 87 is also pivoted up and down.

The upper face of the pivot bar 87 includes a channel which slidably accepts a sliding bearing member 88, which itself accepts the lower end of an adjustment screw having a handle 89. A block 76 thread accepts the adjustment screw approximate its middle, and this block 76 is fixed to a angled rod 77 which is fixed to a pivoting block 78 which is fixed approximately to the rear end of coil diameter shaft 79.
Coil diameter shaft 79 is rotatably mounted along an axis along the "Z" direction by bearings (as known in the art) relative to frame 11.

A cam mounting member 75 is fixed to the front end of the coil diameter shaft 79. This member pivots along a substantially vertical axis along the "Z" direction to allow the coil diameter roller 81, rotatably attached thereto, to be moved into various bending positions between an "extreme in" position (more bending of the wire resulting in a lesser diameter) to an "extreme out" position (lesser bending of the wire resulting in a greater diameter). A spring 74 biases the roller towards the "extreme out" position.

### The Coil Spreader Assembly

The coil spreader assembly 90 provides a varying bending action to the wire which assists in determining the length of a coil spring. Again in reference to Figures 10 and 11, it may be seen that it is often desirable to provide a coil spring which includes a full and complete revolution at the top and bottom ends 8 of the spring; this is especially desirable if the spring is to be placed upon a flat surface. However, in the middle 9 of the spring no overlap is desired, as such could cause the springs to bind or "hook". Therefore it may be understood that it is desirable to provide a variable bending action to the wire to case such a configuration.

Referring now to Figures 14 and 15, the movement of the spreader bar 92 along the "Z" direction is now discussed. As previously discussed, a replaceable spreader cam 25 is fixed relative to the bull gear, and is allowed to rotate with the bull gear relative to the lower feed roll shaft 22. As the spreader cam 91 rotates, it engages a pair of spreader cam followers 94, 95, each of which are adjustably attached to a medial portion of pivoting spreader linkage 96. As will be understood, as the cam followers are engaged and disengaged by the spreader cam 91, the spreader bar 92 is moved outwardly and inwardly, respectively, to cause a spreading action to be imparted upon the springs.

Referring now particalarly to Figure 15, the "right" end of the pivoting spreader linkage 96 is attached to a ball joint assembly 97, which is attached to an adjusting block 98 which is adjustable front-to-back, to allow the vertical pivot point of the pivoting spreader linkage to be moved forward or backward.

The "left" end 112 of the pivoting spreader linkage is reduced to a rectangular cross section, which fits whithin a transverse slot 111 extending through elongate spreader shaft 110. The shaft 110 is slidably mounted relative to the frame 11 by bushings (not shown), such that the shaft may be slide along its longitudinal axis, which is along the "Z" direction. The spreader bar 92 is attached to the forward end of shaft 110 by means of a mount. Spreader shaft 110 is spring-biased into its retracted, rearmost position by a tensile spring 113.

As may be understood, as the spreader cam engages the two cam followers, the spreader linkage 96 tends to pivot relative to its right end, with the left end 112 causing the shaft 110 to move forwardly along direction "Z" (by the pushing action of the cam 25) and rearwardly (by the tensile force of spring 113). This causes the spreader bar 92 to likewise be pushed forwardly (more spreading) and rearwardly (less or no spreading).

It should be understood that the use of two cam followers allows for a wider, adjustable "effective cam follower surface" which allows some adjustment of the cam following action by relative movement of the two cam followers 94, 95, relative to each other and along pivoting linkage 96, as in the preferred embodiment of the spreader cam 25 is not adjustable, although it is replaceable with a cam having a differing profile to match a particular pair of change gears. However, as discussed in later detail, the spreader cam is replaceable, as it may be necessary to change the spreader cam when the change gears are changed to provide a different cam profile corresponding to a different spring shape.

A shield 67 (shown in Figure 1) is fixed in place relative to the frame to move the second convolution of wire out of the way of the spreader bar.

However, as discussed in later detail, the spreader cam is replaceable, and it may be necessary to change the spreader cam when the change gears are changed to provide a different spring shape.

### Wire Cutting

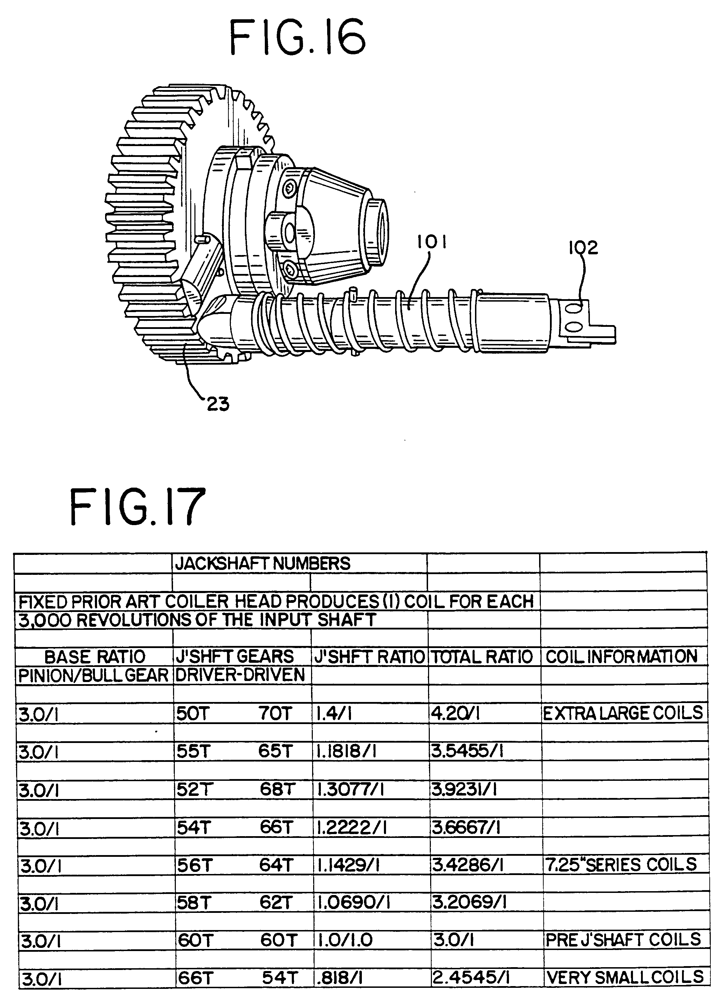

Referring now to Figure 16, the wire cutting process is now discussed. As previously discussed a cutting knife cam 28 is attached to the front face of the bull gear. The cutting knife cam 28 periodically contacts the rear end of a spring-loaded cut-off knife shaft 101, which causes a cut-off knife 102 to cut wire passing through the apparatus. After wire cutting, a spring biases the shaft back to its "retracted" position. The cut-off knife is replaceable.

### Associated Devices

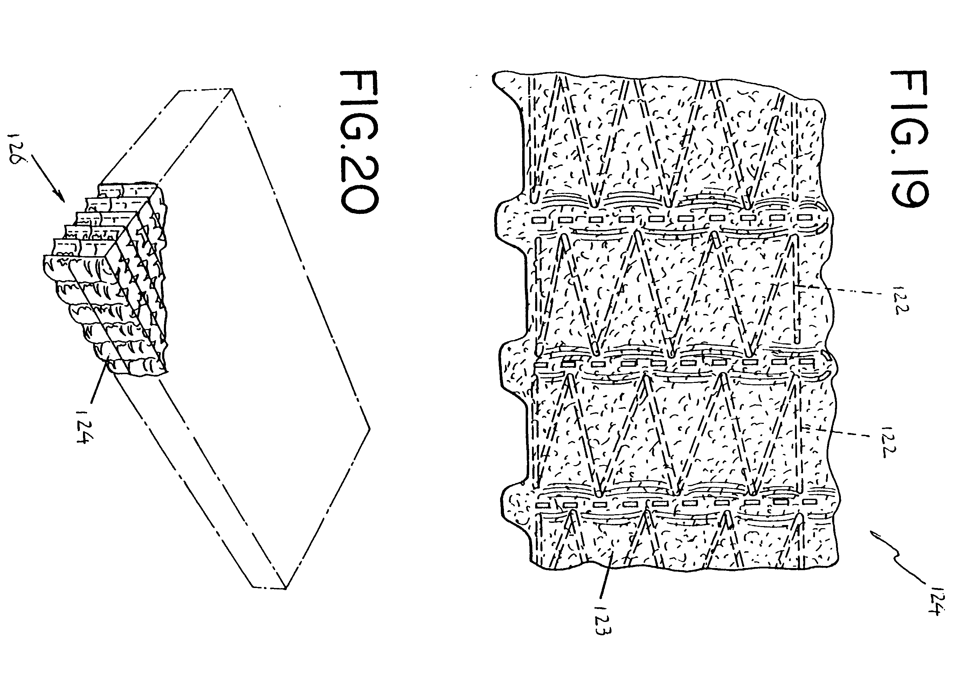

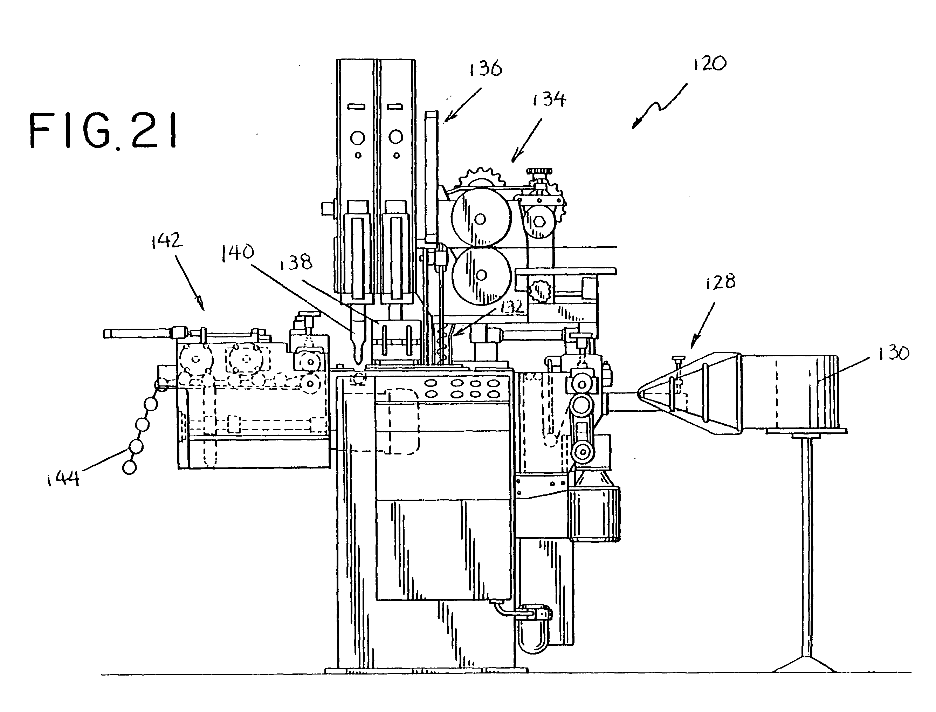

Referring now to Figure 21, a pocketing apparatus 120 is shown, which accepts coils formed from the apparatus 10, and places the coil springs 122 into pocketing material 123, such that a pocketed coil string 124 is provided such as shown in Figures 19 or 20. The strings 124 may be bonded together to form an innerspring construction 126 as shown in Figure 20. Such processes are disclosed in U.S. Patent Nos. 4,234,983, 4,439,977, 4,566,926, 4,578,834, and 4,854,023, to Stumpf. As described in detail in the aforementioned '977 patent, the apparatus 120 includes a fabric folder 128 wich receives pocketing material from a supply roll 130. After folding, the overlapping plies of fabric are separated by coil spring inserter 132, springs are delivered from a coiler assembly 134, and the springs are compressed by a compressor assembly 136 whereafter each spring is inserted between the plies of fabric. The springs are then pocketed by welding the fabric by thermal weld heads 138 and 140. After pocketing, the coil springs are advanced to a turner assembly 142 which rotates the spring causing them to expand in their respective pockets, whereupon a string 144 of pocketed coil springs is formed.

### Timing

In the preferred embodiment, the timing shaft includes cams which engage corresponding switches. Each of these switches cause a specific type of action being part of the overall invention. In the preferred embodiment the switches open and close air valves to allow pressurized air to pneumatically drive or control these actions.

One action is the action of coil compression of the downstream coils. In order to insert the coils into fabric pockets, it is often necessary to compress them.

One action is the action of coil insertion of the compressed coils into the pockets.

One action is the action of thermally welding or otherwise providing coil pockets.

One action is the action of indexing the pocketing fabric after the coils have been inserted.

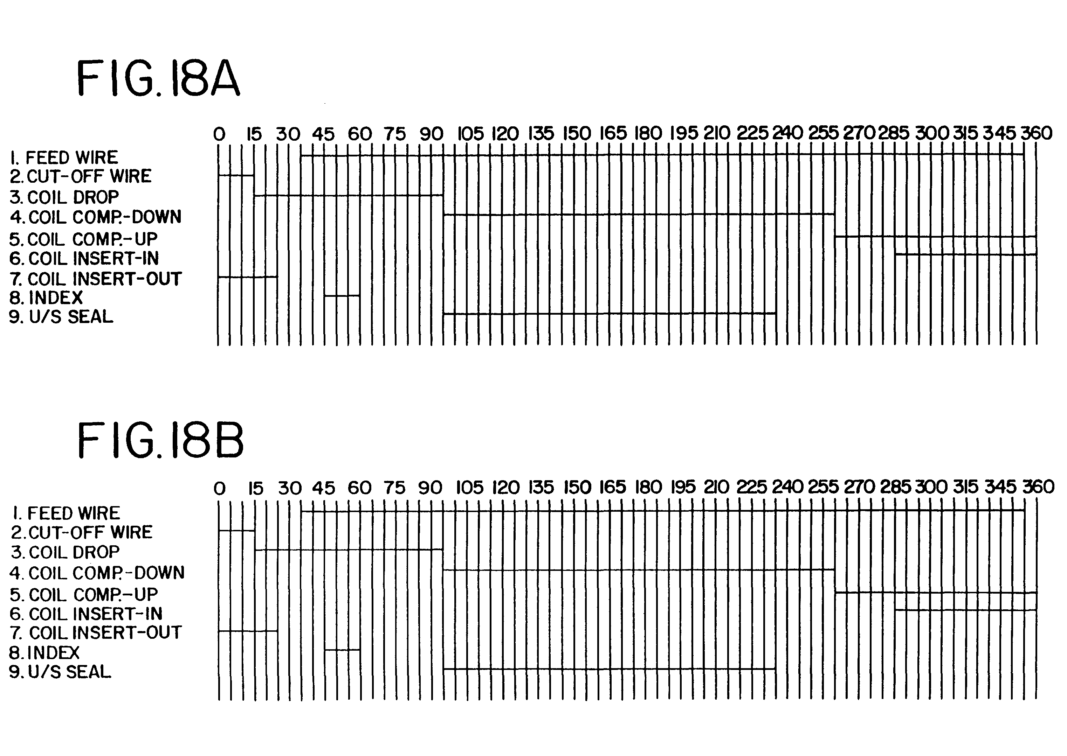

It may therefore by seen that the steps of coil compression, coil insertion, fabric welding, and fabric indexing are all timed in response to rotation of the timing shaft. Therefore it may also be understood that the use of the change gears allows for a change in wire feed for a given rate at which these steps occur. The relative timing of the various processes according to the invention is shown by the graphs shown in Figures 18a and 18b, discussed in detail later.

### Change Gear Ratios and Spreader Gear Changing

As previously discussed, the change gears may be replaced in matching pairs. Each matching pair is accompanied by a particular associated spreader cam 25, which is replaced with the change gears.

Referring now to Figure 17, the different ratios of the change gears which may be used is shown.

Column one, entitled "Base Ratio Pinion/Bull Gear", sets forth the rotational ratio between the pinion and the bull gear: three revolutions of the pinion gear per single revolution of the bull gear.

Collumn two, entitled "J'haft Gears, Driver-Driven", sets forth the number of teeth on the two change gears. For example, in the first line, the change gear on the lower feed roll shaft has 50 teeth, and the change gear on the jackshaft has 70 teeth. The ratio of lower feed roll shaft rotation to rotation of the bull gear (a cycle of opeartion of the spring forming apparatus) is 1.4/1.0, which is set forth in the next column entitled "J'Shaft Ratio". The "Total Ratio", set forth in the following column, is the ratio at which the lower feed roll shaft rotates relative to the bull gear. Again taking the first example, the bottom feed roll shaft rotates 4.2 times per single rotation of the bull gear.

This graph illustrates one important feature of the invention. By changing the change gears, the number of times the feed roll shafts rotate per cycle may be changed. One distinct advantage is that more wire may be fed per cycle, thus providing larger coils if needed. As discussed above, larger coils are at present in high consumer demand.

The advantage of providing additional wire feed is illustrated in reference to Figure 18a and 18b.

Explanation of the terms used in Figures 18a and 18b is as follows. "Feed Wire" is the process of feeding the wire to provide enough for a coil. As discussed above, this is dependent upon the speed of the lower wire feed shaft.

"Cut-Off Wire" is the process of cutting the wire to complete formaton of a coil. The frequency of this is dependent upon the rotational speed of the bull gear, and occurs once per cycle.

"Coil Drop" is the process of dropping the coil from its cut-off position to its position atop of coil compression surface and beneath a coil compression head. The frequency of this is dependent upon the rotational speed of the bull gear, and occurs once per cycle.

"Coil Comp.-Down" is the process of urging the coil compression head downward. "Coil Comp.-Up" is the reverse of the above process. The frequency of this is dependent upon the rotational speed of the timing shaft (which is the same as that of the bull gear), and occurs once per cycle.

"Coil Insert-In" is the process of inserting a compressed coil within a pair of pocketing fabric plies by the use of an inserter head. The frequency of this is dependent upon the rotational speed of the timing shaft (which is the same as that of the bull gear), and occurs once per cycle.

"Coil Insert-Out" is the process of withdrawing the inserter head from the fabric plies. The frequency of this is dependent upon the rotational speed of the timing shaft (which is the same as that of the bull gear), and occurs once per cycle.

"Index" is the process of indexing the fabric one coil width at a time. The frequeny of this is dependent upon the rotational speed of the timing shaft (which is the same as that of the bull gear), and occurs once per cycle.

"U/S Seal" is the process of welding the fabric to form at least part of a fabric pocket. The frequency of this is dependent upon the rotational speed of the timing shaft (which is the same as that of the bull gear), and occurs once per cycle.

As may be seen by a comparison of the two Figures 18A and 18B, the use of change gears and a forming cam allows the provision of a Total Ratio (see Figure 17) of 3.42/1 instead of the previously "locked in" ratio of 3.00/1. Therefore, for a given cycle the feed time of the "feed wire" process may be shortenend for a given amount of wire feed, as the wire may be fed at a greater rate for a given speed of the bull gear.

This in effect causes a "domino" effect, in that by adjusting such elements as 27, 84, 85, 94, and 95, the other process may be given more time, which is desirable in that one of these processes is gravity-dependent, namely the Coil Drop process. It has been found that in many instances this process is the limiting process. Therefore if any time in the cycle may be "borrowed" from other processes (e.g., the Wire Feed cycle) the apparatus 10 may be run at an advantageously high rate, improving production rates. In effect, this allows for an optimization of spring size to production rate.

### Conclusion

Therefore it may be seen that the present invention provides an improvement over the prior art by providing an apparatus for manufacturing springs for an innerspring construction, which provides an optimization of spring size to production rate.

It should be understood that although much of the discussion herein relate to spring for mattresses or box springs, it should be understood that the present invention may also relate to springs used in other constructions, such as cushions.

While this invention has been described in specific detail with reference to the disclosed embodiments, it will be understood that many variations and modifications may be effected within the scope of the invention as defined by the appended claims.

## Claims

1. An apparatus for forming springs from wire (15), comprising:
a frame (11);
a lower feed roll shaft (22) rotatably mounted relative to said frame (11);
a lower feed roll (24) attached to said lower feed roll shaft (22);
an upper feed roll shaft (42) rotatably and pivotably mounted relative to said frame (11);
an upper feed roll (44) attached to said upper feed roll shaft (42), said upper feed roll (44) positioned relative to said lower feed roll (24) such that said upper and lower feed rolls are configured to grip wire (15) between them when said upper and lower feed rolls (24,44) are in a first relative position, and configured to release (15) wire between them when said upper and lower feed rolls (24,22) are moved from said first relative position to a second relative position;
means (12) for rotating said lower and upper feed roll shafts (22,42) such that wire (15) is fed at a rate directly proportional to the rotation of said lower feed roll shaft (22) when said upper and lower feed rolls (24,44) are in said first relative position;
an upper shaft indexing assembly (26,27) configured to allow said upper and lower shafts (22,42) to be periodically brought together and separated, causing said upper and lower feed rolls (24,44) to be correspondingly brought together to said first relative position and separated to said relative position, to allow wire positioned between said feed rolls to be correspondingly gripped and released;
a jackshaft (52) rotatably mounted relative to said frame (11);
a bull gear (23) rotatably mounted relative to said frame (11);
a wire feed assembly (30) for coordinating gripping and releasing of said wire (15) by said upper and lower feed rolls (24,44) to the rotation of said bull gear (23);
a wire cutting assembly (30) for providing periodic cutting of said wire (15), said periodic cutting being synchronized to the rotation of said bull gear (23);
a wire diameter forming assembly (80) for providing periodic diameter forming of said wire (15), said periodic diameter forming being synchronized to the rotation of said bull gear (23);
a wire spreader assembly (90) for providing periodic spreading of said wire (15), said periodic spreading being synchronized to the rotation of said bull gear (23);
**characterized in that** said apparatus further comprises:
a timing shaft assembly (83) including a timing shaft rotatably mounted relative to said frame (11) and rotatably driven at a speed directly proportional to that of said bull gear (23),
a first change gear (19) removably attached to said lower feed roll shaft (22); and
a second change gear (51) removably attached to said jackshaft (52);
such that said change gears (19,51) may be selected and replaced to allow the rate of wire feed to be correspondingly changed for a given rate of rotational speed of said bull gear (23).

2. The apparatus as claimed in Claim 1, wherein the ratio of teeth on said first change gear (19) to the ratio of teeth on said second change gear (51) is 50 to 70.

3. The apparatus as claimed in Claim 1, wherein the ratio of teeth on said first change gear (19) to the ratio of teeth on said second change gear (51) is 55 to 65.

4. The apparatus as claimed in Claim 1, wherein the ratio of teeth on said first change gear (19) to the ratio of teeth on said second change gear (51) is 56 to 62.

5. The apparatus as claimed in Claim 1, wherein the ratio of teeth on said first change gear (19) to the ratio of teeth on said second gear (51) is 66 to 54.

6. An apparatus for forming springs from wire (15) and inserting said springs into a mattress, comprising the apparatus as claimed in any of the Claims 1 - 5, further comprising:
an inserting assembly for compressing coil springs (122), inserting said springs (122) into pocketing fabric (123), and sealing said springs (122) within said fabric (123) to provide a pocketed coil string (124);
wherein said timing shaft (83) is configured to provide timing signals to said inserting assembly (120), such that the steps of said coil compression, insertion, and sealing are all synchronized to said timing shaft (83).

7. The apparatus as claimed in Claim 6, wherein said timing shaft assembly (83) comprises a plurality of cams (84,85) and triggers (86) which cause signals associated with compressed air to initiate said compression, insertion, and sealing steps.

8. The apparatus as claimed in Claim 6 or 7, wherein said timing shaft (83) is driven at the same rotational speed as said bull gear (23).

9. The apparatus as claimed in Claim 6, 7 or 8, wherein said upper and lower feed rolls (24,44) each include an annular V-shaped slot having sides each having a substantially straight portion.

10. The apparatus as claimed in Claim 6, wherein said bull gear (23) is rotatably mounted upon said lower feed roll shaft (24) .

11. The apparatus as claimed in Claim 6, wherein said wire spreader assembly includes a replaceable spreader cam (25) fixed relative to said bull gear (23), said spreader cam (25) being capable of replaceable along with said change gears (19,51).

12. The apparatus as claimed in Claim 6, wherein the ratio of teeth on said first change gear (19) to the ratio of teeth on said second change gear (51) is 52 to 68.

13. The apparatus as claimed in Claim 6, wherein the ratio of teeth on said first change gear (19) to the ratio of teeth on said second change gear (51) is 54 to 66.

## Patentansprüche

1. Vorrichtung zur Bildung von Federn aus Draht (15), umfassend:
ein Gestell (11);
eine untere Zuführrollenachse (22), die drehbar bezüglich des Gestells (11) angebracht ist;
eine untere Zuführrolle (24), die an der unteren Zuführrollenachse (22) befestigt ist;
eine obere Zuführrollenachse (42), die bezüglich des Gestells (11) drehbar und schwenkbar angebracht ist;
eine obere Zuführrolle (44), die an der oberen Zuführrollenachse (42) befestigt ist, wobei die obere Zuführrolle (44) derart bezüglich der unteren Zuführrolle (24) positioniert ist, daß die obere und untere Zuführrolle konfiguriert sind, um einen Draht (15) zwischen diesen zu erfassen, wenn sich die obere und untere Zuführrolle (24, 44) in einer ersten relativen Position befinden, und konfiguriert sind, den Draht (15) zwischen diesen loszulassen, wenn die obere und untere Zuführrolle (24, 22) von der ersten relativen Position zu einer zweiten relativen Position bewegt werden;
Mittel (12) zur Drehung der unteren und oberen Zuführrollenachsen (22, 42), so daß Draht (15) mit einer zu der Drehung der unteren Zuführrollenachse (22) direkt proportionalen Geschwindigkeit zugeführt wird, wenn die oberen und unteren Zuführrollen (22, 44) sich in der ersten relativen Position befinden;
eine Anordnung (26, 27) zur intermittierenden Bewegung der oberen Welle, konfiguriert, um ein periodisches Zusammenbringen und Trennen der oberen und unteren Wellen (22, 24) zu ermöglichen, wodurch die obere und untere Zuführrolle (22, 44) in die erste relative Position zusammengebracht werden und in die genannte relative Position getrennt werden, um es zwischen den Zuführrollen positioniertem Draht zu ermöglichen, erfaßt und losgelassen zu werden;
eine Zwischenwelle (52), die drehbar bezüglich des Gestells (11) angebracht ist;
ein Antriebszahnrad (23), das drehbar bezüglich des Gestells (11) angebracht ist;
eine Drahtzuführanordnung (30), um das Erfassen und Loslassen des Drahtes (15) durch die obere und untere Zuführrolle (24, 44) mit der Drehung des Antriebszahnrades (23) zu koordinieren;
eine Drahtschneideanordnung (30), um ein periodisches Abschneiden des Drahtes (15) bereitzustellen, wobei das periodische Abschneiden mit der Drehung des Antriebszahnrades (23) synchronisiert ist;
eine Drahtdurchmesserformungsanordnung (80), um eine periodische Durchmesserformung des Drahtes (15) bereitzustellen, wobei die periodische Durchmesserformung mit der Drehung des Antriebszahnrades (23) synchronisiert ist;
eine Drahtdehnungsanordnung (90), um eine periodische Dehnung des Drahtes (15) bereitszustellen, wobei die periodische Dehnung mit der Drehung des Antriebszahnrades (23) synchronisiert ist;
**dadurch gekennzeichnet, daß** die Vorrichtung weiterhin umfaßt:
eine Synchronisationswellenanordnung (83), die eine Synchronisationswelle beinhaltet, die drehbar bezüglich des Gestells (11) angebracht ist und die mit einer Geschwindigkeit zur Drehung angetrieben ist, die direkt proportional zu der des Antriebszahnrades (23) ist,
ein erstes schaltbares Zahnrad (19), das lösbar an der Zuführrollenachse (22) befestigt ist; und
ein zweites schaltbares Zahnrad (51), das lösbar an der Zwischenwelle (52) befestigt ist;
so daß die schaltbaren Zahnräder (19, 51) ausgewählt und ausgetauscht werden können, um zu ermöglichen, daß die Drahtzuführgeschwindigkeit für eine gegebene Drehgeschwindigkeit des Antriebszahnrades entsprechend geändert werden kann.

2. Vorrichtung nach Anspruch 1, **dadurch gekennzeichnet, daß** das Verhältnis der Zähne auf dem ersten schaltbaren Zahnrad (19) zu dem Verhältnis der Zähne auf dem zweiten schaltbaren Zahnrad (51) 50 zu 70 ist.

3. Vorrichtung nach Anspruch 1, **dadurch gekennzeichnet, daß** das Verhältnis der Zähne auf dem ersten schaltbaren Zahnrad (19) zu dem Verhältnis der Zähne auf dem zweiten schaltbaren Zahnrad (51) 55 zu 65 ist.

4. Vorrichtung nach Anspruch 1, **dadurch gekennzeichnet, daß** das Verhältnis der Zähne auf dem ersten schaltbaren Zahnrad (19) zu dem Verhältnis der Zähne auf dem zweiten schaltbaren Zahnrad (51) 56 zu 62 ist.

5. Vorrichtung nach Anspruch 1, **dadurch gekennzeichnet, daß** das Verhältnis der Zähne auf dem ersten schaltbaren Zahnrad (19) zu dem Verhältnis der Zähne auf dem zweiten schaltbaren Zahnrad (51) 66 zu 54 ist.

6. Vorrichtung zum Bilden von Federn aus Draht (15) und Einbringen der Federn in eine Matratze, umfassend die in einem der Ansprüche 1 bis 5 beanspruchte Vorrichtung, weiterhin umfassend:
eine Einbringanordnung zum Zusammendrücken von Spiralfedern (122), Einbringen der Federn (122) in ein taschenartiges Gewebe (123) und Verschließen der Federn (122) in dem Gewebe (123), um eine in einer Tasche befindliche Spiralfeder (124) bereitzustellen;
wobei die Synchronisationswelle (83) so konfiguriert ist, daß sie Synchronisationssignale für die Einbringanordnung (120) bereitstellt, so daß die Schritte des Zusammendrückens, des Einbringens und des Verschließens der Spiralfedern alle durch die Synchronisationswelle (83) synchronisiert sind.

7. Vorrichtung nach Anspruch 6, **dadurch gekennzeichnet, daß** die Synchronisationswellenanordnung (83) eine Vielzahl von Steuerkurven (84, 85) und Auslösern (86) umfaßt, welche mit Druckluft assoziierte Signale hervorrufen, um die Schritte des Zusammendrükkens, Einbringens und Verschließens einzuleiten.

8. Vorrichtung nach Anspruch 6 oder 7, **dadurch gekennzeichnet, daß** die Synchronisationswelle (83) mit derselben Rotationsgeschwindigkeit wie das Antriebszahnrad (23) angetrieben ist.

9. Vorrichtung nach einem der Ansprüche 6, 7 oder 8, **dadurch gekennzeichnet, daß** die obere und untere Zuführrolle (24, 44) je einen ringförmigen V-förmigen Schlitz mit Seiten, die jeweils einen im wesentlichen geraden Abschnitt haben, beinhalten.

10. Vorrichtung nach Anspruch 6, **dadurch gekennzeichnet, daß** das Antriebszahnrad (23) drehbar auf der unteren Zuführrollenachse (24) angebracht ist.

11. Vorrichtung nach Anspruch 6, **dadurch gekennzeichnet, daß** die Drahtdehnungsanordnung eine austauschbare Dehnungssteuerkurve (25) beinhaltet, die relativ zu dem Antriebszahnrad (23) befestigt ist, wobei die Dehnungsnocke (25) zusammen mit den schaltbaren Zahnrädern (19, 51) austauschbar ist.

12. Vorrichtung nach Anspruch 6, **dadurch gekennzeichnet, daß** das Verhältnis der Zähne auf dem ersten schaltbaren Zahnrad (19) zu dem Verhältnis der Zähne auf dem zweiten schaltbaren Zahnrad (51) 52 zu 68 ist.

13. Vorrichtung nach Anspruch 6, **dadurch gekennzeichnet, daß** das Verhältnis der Zähne auf dem ersten schaltbaren Zahnrad (19) zu dem Verhältnis der Zähne auf dem zweiten schaltbaren Zahnrad (51) 54 zu 66 ist.

## Revendications

1. Dispositif pour la formation de ressorts à partir d'un fil métallique (15), comprenant
-- un bâti (11) ;
-- un arbre (22) de rouleau d'approvisionnement inférieur monté tournant par rapport audit bâti (11);
-- un rouleau (24) d'approvisionnement inférieur fixé audit arbre (22) du rouleau d'approvisionnement inférieur ;
-- un arbre (42) de rouleau d'approvisionnement supérieur monté tournant et pouvant pivoter par rapport audit bâti (11);
-- un rouleau (44) d'approvisionnement supérieur fixé audit arbre (42) du rouleau d'approvisionnement supérieur, ledit rouleau d'approvisionnement supérieur (44) étant positionné par rapport audit rouleau (24) d'approvisionnement inférieur de telle façon que lesdits rouleaux supérieur et inférieur soient configurés de manière à saisir le fil (15) entre eux lorsque lesdits rouleaux d'approvisionnement supérieur et inférieur (24,44) sont dans une première position relative, et soient configurés de façon à libérer le fil (15) entre eux lorsque lesdits rouleaux d'approvisionnement supérieur et inférieur (24, 44) sont déplacés depuis ladite première position relative vers une seconde position relative ;
-- des moyens (12) pour faire tourner lesdits arbres des rouleaux d'approvisionnement supérieur et inférieur (22,42) de telle façon que le fil (15) est approvisionné à une vitesse directement proportionnelle à la rotation dudit arbre (22) du rouleau d'approvisionnement inférieur lorsque lesdits rouleaux d'approvisionnement supérieur et inférieur (24,44) sont dans ladite première position relative ;
-- un ensemble d'indexage (26,27) de l'arbre supérieur configuré de façon à permettre auxdits arbres supérieur et inférieur (22,42) d'être périodiquement amenés l'un contre l'autre et séparés, provoquant l'amenée l'un contre l'autre correspondante desdits rouleaux d'approvisionnement supérieur et inférieur (24,44) vers ladite première position relative et leur séparation vers ladite position relative, de façon à permettre au fil d'être positionné entre lesdits rouleaux d'approvisionnement de façon à être en correspondance saisi et relâché ;
-- un arbre auxiliaire (52) monté tournant par rapport audit bâti (11);
-- un pignon de force (23) monté tournant par rapport audit bâti (11);
-- un ensemble (30) d'approvisionnement du fil pour coordonner la saisie et la libération dudit fil (15) par lesdits rouleaux supérieur et inférieur (24,44) avec la rotation dudit pignon de force (23) ;
-- un ensemble (30) de découpe du fil pour fournir une découpe périodique dudit fil (15), ladite découpe périodique étant synchronisée avec la rotation dudit pignon de force (23) ;
-- un ensemble (80) de formage du diamètre du fil pour assurer de façon périodique la formation du diamètre dudit fil (15), ladite formation périodique du diamètre étant synchronisée avec la rotation dudit pignon de force (23) ;
-- un ensemble (90) tendeur de fil pour assurer la mise sous tension périodique dudit fil (15), ladite tension périodique étant synchronisée avec la rotation dudit pignon de force (23) ;
-- **caractérisé en ce que** ledit dispositif comprend en outre:
-- un ensemble (83) d'arbre de temporisation comprenant un arbre de temporisation monté de façon à pouvoir tourner par rapport audit bâti (11) et entraîné en rotation à une vitesse directement proportionnelle à celle dudit pignon de force (23),
-- un premier pignon (19) de variation fixé de façon amovible audit arbre (22) du rouleau d'approvisionnement inférieur ; et
-- un second pignon (51) de variation fixé de façon amovible audit arbre auxiliaire (52) ;
-- de telle façon que lesdits pignons de variation (19,51) peuvent être sélectionnés et remplacés de façon à permettre de modifier de manière correspondante la vitesse d'approvisionnement du fil pour une vitesse donnée de la vitesse de rotation dudit pignon de force (23).

2. Dispositif selon la revendication 1, dans lequel le rapport des dents que porte ledit premier pignon (19) de variation au rapport des dents que porte ledit second pignon (51) de variation est de 50 à 70.

3. Dispositif selon la revendication 1, dans lequel le rapport des dents que porte ledit premier pignon (19) de variation au rapport des dents que porte ledit second pignon (51) de variation est de 55 à 65.

4. Dispositif selon la revendication 1, dans lequel le rapport des dents que porte ledit premier pignon (19) de variation au rapport des dents que porte ledit second pignon (51) de variation est de 56 à 62.

5. Dispositif selon la revendication 1, dans lequel le rapport des dents que porte ledit premier pignon (19) de variation au rapport des dents que porte ledit second pignon (51) de variation est de 66 à 54.

6. Dispositif pour former des ressorts à partir d'un fil (15) et pour introduire lesdits ressorts dans un matelas, comprenant le dispositif selon l'une quelconque des revendications 1 à 5, comprenant en outre :
-- un ensemble d'insertion pour comprimer les ressorts hélicoïdaux (122), pour introduire lesdits ressorts (122) dans un tissu d'empaquetage, et pour sceller lesdits ressorts (122) l'intérieur dudit tissu (123) de façon à former une chaîne de ressorts enfermés dans des poches (124);
-- dans lequel l'arbre de temporisation (83) est configuré de façon à fournir des signaux de temporisation audit ensemble d'insertion (120), de telle sorte que les étapes de ladite compression des ressorts, de leur insertion, et du scellement soient toutes synchronisées par ledit l'arbre de temporisation (83).

7. Dispositif selon la revendication 6, dans lequel ledit ensemble d'arbre de temporisation (83) comprend une pluralité de cames (84,85) et des déclencheurs qui produisent des signaux associés avec de l'air comprimé pour effectuer lesdites étapes de compression, insertion et scellement.

8. Dispositif selon les revendications 6 ou 7, dans lequel ledit arbre de temporisation (83) est entraîné à la même vitesse de rotation que ledit pignon de force (23).

9. Dispositif selon la revendication 6, 7 ou 8, dans lequel lesdits rouleaux d'approvisionnement supérieur et inférieur comportent chacun une fente annulaire en V présentant des côtés comportant chacun une partie essentiellement droite.

10. Dispositif selon la revendication 6, dans lequel ledit pignon de force (23) est monté en rotation sur ledit arbre (24) du rouleau d'approvisionnement inférieur.

11. Dispositif selon la revendication 6, dans lequel ledit ensemble tendeur de fil comprend une came tendeur (25) pouvant être remplacée fixée relativement audit pignon de force (23), ladite came tendeur (25) étant susceptible d'être remplacée en même temps que lesdits pignons de variation (19,51).

12. Dispositif selon la revendication 6, dans lequel le rapport des dents que porte ledit premier pignon (19) de variation au rapport des dents que porte le second pignon (51) de variation est de 52 à 68.

13. Dispositif selon la revendication 6, dans lequel le rapport des dents que porte ledit premier pignon (19) de variation au rapport des dents que porte ledit second pignon (51) de variation est de 54 à 66.
